# EUROPÄISCHE PATENTSCHRIFT

(11) **EP 3 072 634 B1**
(45) Veröffentlichungstag und Bekanntmachung des Hinweises auf die Patenterteilung: **16.08.2017**
(21) Anmeldenummer: 16000512.0
(22) Anmeldetag: 03.03.2016
(51) Int. Cl.: B23Q 1/70, B23Q 3/12

(54) **WERKZEUGREVOLVER**
TOOL REVOLVER
TOURELLE REVOLVER

(30) Priorität: 26.03.2015 DE 102015003892
(43) Veröffentlichungstag der Anmeldung: 28.09.2016
(73) Patentinhaber: Sauter Feinmechanik GmbH, 72555 Metzingen (DE)
(72) Erfinder: Schips, Günther, 72793 Pfullingen (DE); Giesler, Steffen, 72458 Albstadt (DE)
(74) Vertreter: Bartels & Partner

(56) Entgegenhaltungen:
- EP-B1- 1 961 515
- US-A- 2 866 530
- US-A- 3 023 677

## Beschreibung

Die Erfindung betrifft einen Werkzeugrevolver, mit einem an einer Werkzeugmaschine anzubringenden oder angebrachten Grundkörper, der eine Revolverachse definiert, um die drehbar am Grundkörper eine Werkzeugscheibe gelagert ist, die mehrere an ihrem Umfang verteilte Werkzeugstationen aufweist, die durch Drehen der Werkzeugscheibe jeweils in mindestens eine Arbeitsposition bringbar sind, in der ein im Inneren der Werkzeugscheibe befindlicher Spindelantrieb mit seinem antriebsseitigen Kupplungsteil mit einem abtriebsseitigen, von einem motorischen Werkzeugantrieb antreibbaren Kupplungsteil des Grundkörpers für den Antrieb eines Werkzeuges in Kupplungseingriff kommt, das sich an der auf die Arbeitsposition ausgerichteten Werkzeugstation befindet, und mit einer Ausgleichseinrichtung zum Ausgleich von Lage- oder Fluchtungsfehlern zumindest im Bereich dieses Kupplungseingriffs.

Werkzeugrevolver dieser Art sind bekannt. Beispielsweise zeigt die DE 10 2005 033 890 A1 einen Werkzeugrevolver, der für den Einsatz bei Drehmaschinen, Bearbeitungszentren und ähnlichen Vorrichtungen, wie Werkzeugmaschinen, vorgesehen ist.

Bei der Benutzung solcher Werkzeugrevolver handelt es sich bei den an den Werkzeugstationen befindlichen Werkzeugen, die zum Einsatz kommen sollen, hauptsächlich um Werkzeuge zur spanabhebenden Bearbeitung, wie rotatorisch angetriebene Bohr- oder Fräswerkzeuge. Für den Antrieb der betreffenden Werkzeuge mittels eines ortsfesten und üblicherweise durch einen Elektromotor gebildeten Werkzeugantriebs, kommt im Zuge der Einfahrbewegung einer jeweiligen Werkzeugstation in die Arbeitsposition das antriebsseitige Kupplungsteil des zugehörigen Spindelantriebs in formschlüssigen Kupplungseingriff mit dem komplementären abtriebsseitigen Kupplungsteil des Werkzeugantriebs am Grundkörper.

Wenn derartige Werkzeugrevolver bei modernen Bearbeitungsmaschinen, wie CNC-gesteuerten Bearbeitungszentren, eingesetzt werden, wo zur Erreichung einer hohen Produktivität Hochleistungswerkzeuge benutzt werden, sind für den Spindelantrieb hohe Drehzahlen erforderlich, die bei Hartmetallwerkzeugen 4000 Umdrehungen pro Minute oder mehr betragen können. Wie sich gezeigt hat, können bei hohen Drehzahlen Schwingungserscheinungen auftreten, die sich sowohl auf die Qualität der Bearbeitung als auch auf die Standzeit der Werkzeuge ungünstig auswirken. Um diesen unerwünschten Erscheinungen entgegen zu wirken, ist es gemäß dem Dokument EP 1 961 515 B1 bei einem Werkzeugrevolver der eingangs genannten Gattung Stand der Technik, eine Ausgleichsvorrichtung vorzusehen, die im Bereich des Eingriffs zwischen den abtriebsseitigen und den antriebsseitigen Kupplungsteilen Lage- oder Fluchtungsfehler ausgleicht, was im Betrieb zu einem geringeren Spiel zwischen diesen Kupplungsteilen und damit zu geringerer Schwingungserzeugung führt.

Ausgehend von diesem Stand der Technik stellt sich die Erfindung die Aufgabe, einen Werkzeugrevolver zur Verfügung zu stellen, der sich im Vergleich zu der genannten, bekannten Lösung durch eine vereinfachte Bauweise und verbessertes Betriebsverhalten auszeichnet.

Erfindungsgemäß löst diese Aufgabe ein Werkzeugrevolver, der die Merkmale des Patentanspruchs 1 in seiner Gesamtheit aufweist.

Gemäß dem kennzeichnenden Teil des Anspruchs 1 zeichnet sich die Erfindung dadurch aus, dass die Ausgleichseinrichtung im Grundkörper zwischen dem Werkzeugantrieb und dem antriebsseitigen Kupplungsteil des Spindelantriebs angeordnet ist. Bei der bekannten Lösung ist die Ausgleichseinrichtung durch eine kardanische Anordnung zwischen der Welle des Spindelantriebs einer jeden Werkzeugstation und dem jeweils zugehörigen antriebsseitigen Kupplungsteil dieser Werkzeugstation gebildet. Da bei der Erfindung lediglich eine einzige, im feststehenden Grundkörper befindliche Ausgleichseinrichtung vorgesehen ist, ergibt sich eine wesentliche Verringerung des Bauaufwands gegenüber der bekannten Lösung, bei der für jede Werkzeugstation der Werkzeugscheibe eine eigene Ausgleichsvorrichtung erforderlich ist. In Anbetracht der bei modernen Werkzeugrevolvern üblichen größeren Anzahl von Werkzeugstationen, wo an der Werkzeugscheibe zwölf oder mehr Stationen vorgesehen sein können, ergibt sich nicht nur eine wesentliche Verringerung des Aufwands und der Kosten, sondern die bei Wegfall eigener Ausgleichseinrichtungen vereinfachte Bauweise der Spindelantriebe ermöglicht auch eine besonders vorteilhafte, kompakte Bauweise der Werkzeugscheibe und damit des Werkzeugrevolvers.

Bei vorteilhaften Ausführungsbeispielen weist der Werkzeugantrieb eine Antriebswelle mit einer koaxialen Bohrung auf, die in ihrem der Werkzeugscheibe zugewandten offenen Endbereich für ein in die Bohrung eingreifendes Schaftteil des abtriebsseitigen Kupplungsteils einen die Ausgleichseinrichtung bildenden, begrenzt nachgiebigen Sitz bildet. Dadurch lässt sich die Ausgleichseinrichtung in einfacher und platzsparender Bauweise im Grundkörper realisieren.

Bei besonders vorteilhaften Ausführungsbeispielen ist zur Bildung der Ausgleichseinrichtung zwischen dem Außenumfang des Schaftteils und der Bohrung der Antriebswelle mindestens ein federnachgiebiges Element angeordnet. Vorteilhafterweise können als nachgiebige Elemente zumindest zwei elastomere Ringkörper, vorzugsweise O-Ringe, vorgesehen sein, die in Ringnuten sitzen, die in einem axialen Abstand voneinander im Außenumfang des Schaftteils ausgebildet sind. Vorzugsweise ist im Bereich der O-Ringe ein geringfügiges Radialspiel zwischen Schaftteil und Bohrung der Antriebswelle vorgesehen.

Im Sitz für das Schaftteil kann des Weiteren eine formschlüssige Antriebsverbindung zwischen Antriebswelle und dem abtriebsseitigen Kupplungsteil gebildet sein.

Mit besonderem Vorteil kann zur Bildung der formschlüssigen Antriebsverbindung eine Evolventenverzahnung vorgesehen sein, die zwischen der Bohrung der Antriebswelle und einem Abschnitt des Schaftteils ausgebildet ist, der sich in dem von den elastomeren Ringkörpern axial versetzten, von der Werkzeugscheibe abgewandten Endteil des Schaftteils befindet. Bei dieser Kombination aus eine radiale Nachgiebigkeit ermöglichenden elastomeren Körpern und einer in axialem Abstand davon befindlichen Evolventenverzahnung, die bei gegebenem Flankenspiel eine axiale Relativbewegung ermöglicht, stellt die so gebildete Ausgleichseinrichtung für das abtriebsseitige Kupplungsteil sowohl eine gedämpfte, radiale Bewegungsmöglichkeit als auch eine axiale Beweglichkeit zur Verfügung.

Um die axiale Beweglichkeit in gewünschten engen Grenzen zu halten, kann die Anordnung mit Vorteil so getroffen sein, dass das abtriebsseitige Kupplungsteil eine von dem der Werkzeugscheibe zugewandten Ende ausgehende, koaxiale Sackbohrung aufweist, an deren Grund ein Durchgang für eine Schraube gebildet ist, die mit einem in der Bohrung der Antriebswelle festgelegten Haltekörper derart verschraubt ist, dass zwischen dem in der Sackbohrung befindlichen Schraubenkopf und deren Grund ein Axialspiel gebildet ist. Dadurch ist die Axialbeweglichkeit des abtriebsseitigen Kupplungsteils auf die Größe dieses Spiels begrenzt.

Für den Haltekörper kann in der Bohrung der Antriebswelle ein eine Anschlagschulter bildender Absatz vorgesehen sein, an dem der Haltekörper gegen eine Bewegung in Richtung auf die Werkzeugscheibe hin gesichert ist.

Für den bei Einfahren einer jeweiligen Werkzeugstation in die Arbeitsposition zu bildenden Kupplungseingriff zwischen abtriebsseitigem Kupplungsteil des jeweiligen Spindelantriebs und antriebsseitigem Kupplungsteil des Werkzeugantriebs kann die Sackbohrung des abtriebsseitigen Kupplungsteils am offenen Ende mit einem Querschlitz geöffnet sein, in den ein Mitnehmersteg am antriebsseitigen Kupplungsteil der Spindelantriebe bei der Bewegung der jeweiligen Werkzeugstation in die Arbeitsposition einfahrbar ist.

Nachstehend ist die Erfindung anhand eines in der Zeichnung dargestellten Ausführungsbeispiels im Einzelnen erläutert.

Es zeigen:
- Fig. 1: eine Schnittdarstellung eines Teils eines Ausführungsbeispiels des erfindungsgemäßen Werkzeugrevolvers, wobei vom Grundkörper lediglich der Bereich einer Arbeitsposition mit Antriebswelle und abtriebsseitigem Kupplungsteil und von der Werkzeugscheibe lediglich ein Bereich einer Werkzeugstation mit Spindelantrieb und antriebsseitigem Kupplungsteil dargestellt sind, und
- Fig. 2: einen vergrößert gezeichneten Ausschnitt aus Fig. 1.

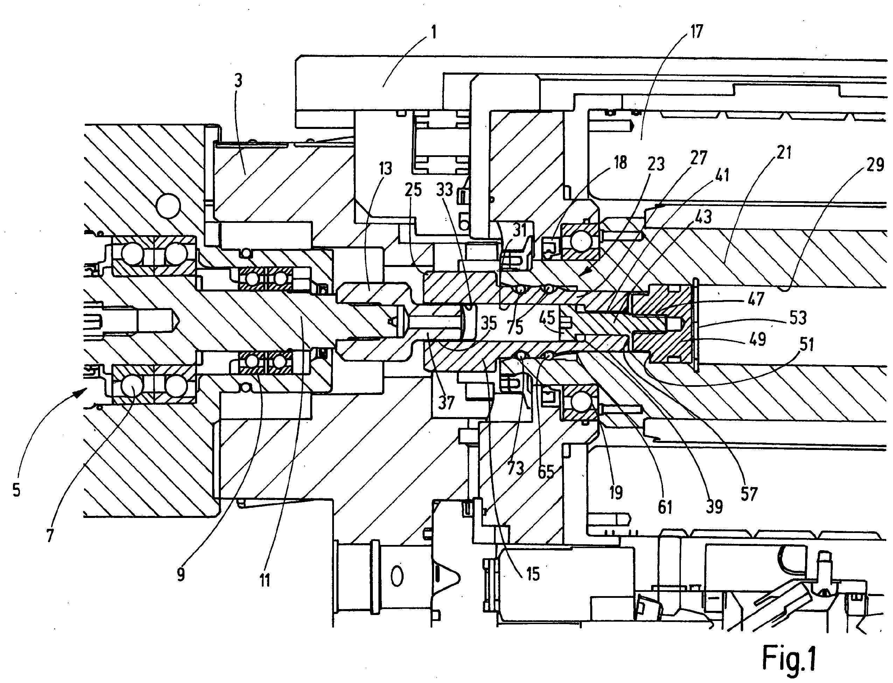

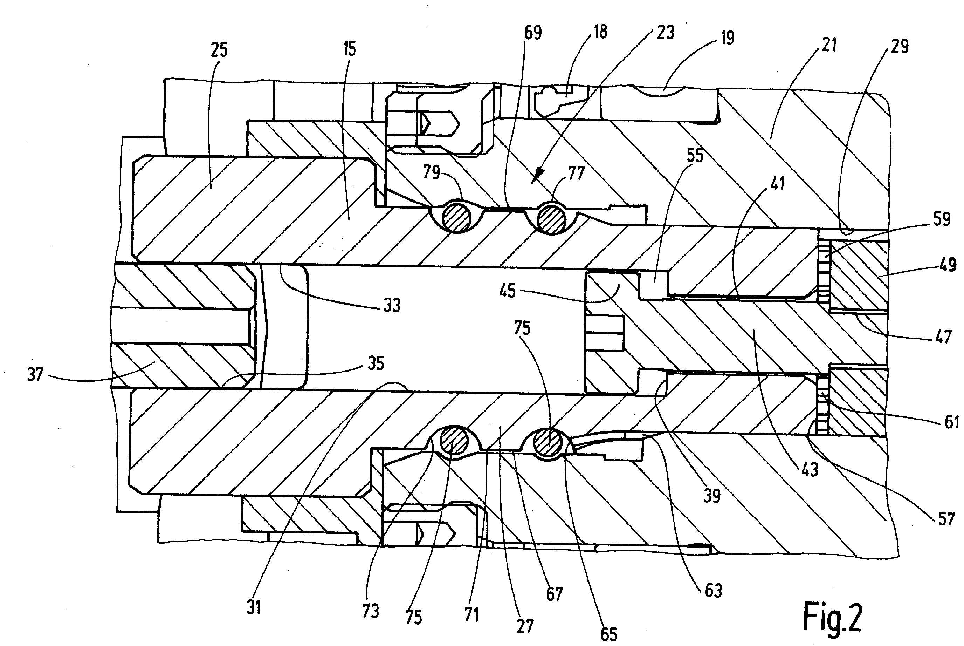

In Fig. 1 sind der sichtbare Teil des Grundkörpers des Ausführungsbeispiels mit 1 und der sichtbare Teil der zugehörigen Werkzeugscheibe mit 3 bezeichnet. Von der Mehrzahl der an der Werkzeugscheibe 3 umfänglich verteilten Werkzeugstationen ist in Fig. 1 von lediglich einer Werkzeugstation 5 der Spindelantrieb sichtbar, mit einer in Wälzlagern 7 und 9 gelagerten Spindelwelle 11. Die Werkzeugscheibe 3 ist in einer Drehposition dargestellt, bei der ein am Ende der Spindelwelle 11 festgelegtes, antriebsseitiges Kupplungsteil 13 sich in Kupplungseingriff mit einem abtriebsseitigen Kupplungsteil 15 des Werkzeugantriebs des Grundkörpers 1 befindet. Der Werkzeugantrieb weist einen Elektromotor 17 auf, dessen Motorwelle 21, die in einer mittels einer Lippendichtung 18 abgedichteten Wälzlagerung 19 gelagert ist, das zur Welle 21 koaxial angeordnete, abtriebsseitige Kupplungsteil 15 antreibt, wobei zwischen Welle 21 und abtriebsseitigem Kupplungsteil 15 eine Ausgleichseinrichtung 23 vorhanden ist, deren Einzelheiten nachstehend, wie auch die Einzelheiten des Kupplungseingriffs zwischen antriebsseitigem Kupplungsteil 13 und abtriebsseitigem Kupplungsteil 15, unter Bezug auf die Fig. 2, näher erläutert sind.

Das abtriebsseitige Kupplungsteil 15 hat die Form eines Rotationskörpers mit einem den größten Außendurchmesser besitzenden Kopfteil 25 an dem der Werkzeugscheibe 3 zugewandten Ende und einem demgegenüber im Durchmesser verringerten Schaftteil 27. Dieses erstreckt sich in eine in der Antriebswelle 21 koaxial ausgebildete Bohrung 29. Im abtriebsseitigen Kupplungsteil 15 ist, vom Kopfteil 25 ausgehend, eine koaxiale Sackbohrung 31 gebildet, die an dem im Kopfteil 25 befindlichen Endbereich durch einen Querschlitz 33 geöffnet ist, der sich senkrecht zur Zeichnungsebene der Fig. 1 und 2 erstreckt und ebene Mitnehmer- oder Kupplungsflächen 35 bildet, mit denen ein flächiger Mitnehmersteg 37 am Ende des antriebsseitigen Kupplungsteils 13 in formschlüssigen Kupplungseingriff kommt, wenn der Mitnehmersteg 37 mit einer senkrecht zur Zeichnungsebene erfolgenden Einfahrbewegung in den Querschlitz 33 eingefahren ist, wie dies in Fig. 1 und 2 dargestellt ist.

Am Bohrungsgrund 39 der Sackbohrung 31 befindet sich ein Durchgang 41 für eine Schraube 43, deren Schraubenkopf 45 sich innerhalb der Sackbohrung 31 befindet. Der endseitige Gewindeabschnitt 47 der Schraube 43 ist mit einem Haltekörper 49 verschraubt, der in der Bohrung 29 der Antriebswelle 21 festgelegt ist. Wie die Figuren zeigen, ist die Bohrung 29 im Innendurchmesser gestuft, wobei an einem Absatz eine Halteschulter 51 gebildet ist, an der der Haltekörper 49 gegen eine Bewegung in Richtung auf die Werkzeugscheibe 3 festgelegt ist. Gegen eine entgegengesetzte Axialbewegung ist der Haltekörper 49 durch einen Seegerring 53 gesichert. Für eine begrenzte Axialbeweglichkeit des abtriebsseitigen Kupplungsteils 15 ist die Schraube 43 mit dem Haltekörper 49 derart verschraubt, dass zwischen Schraubenkopf 45 und Bohrungsgrund 39 ein Spielraum 55 gebildet ist, wie auch zwischen dem Ende 57 des Schaftteils 27 und dem Haltekörper 49 ein Spielraum 59 gebildet ist. Diese Spielräume 55, 59, die lediglich in Fig. 2 beziffert sind, sind in der Zeichnung übertrieben groß dargestellt.

Für die Drehmomentübertragung zwischen der Antriebswelle 21 und dem Schaftteil 27 des abtriebsseitigen Kupplungsteils 15 ist in dem Längenabschnitt der Bohrung 29, der sich von der Schulter 51 ausgehend in Richtung auf die Werkzeugscheibe 3 erstreckt, eine Evolventenverzahnung 61 (Fig. 2) gebildet, die mit einer Evolventenverzahnung 63 am Außenumfang des Schaftteils 27 kämmt, die sich über einen Längenabschnitt bis zu einer ersten Ringnut 65 erstreckt, die in einem im Durchmesser vergrößerten Längenabschnitt 67 des Schaftteils 27 gebildet ist, der sich bis zum im Durchmesser noch weiter vergrößerten Kopfteil 25 erstreckt. Dieser Längenabschnitt 67 weist als Hauptteil der Ausgleichseinrichtung einen Außendurchmesser auf, der minimal geringfügig kleiner als der Innendurchmesser im Endabschnitt 69 der gestuften Bohrung 29 der Antriebswelle 21 ist, so dass ein minimales Radialspiel 71 im Längenabschnitt 67 des Schafteils 27 gebildet ist. In einem axialen Abstand von der ersten Ringnut 65, in Richtung auf die Werkzeugscheibe 3 hin versetzt, ist im Außenumfang des Längenabschnitts 67 eine zweite Ringnut 73 gebildet. In beiden Ringnuten 65, 73 ist als nachgiebiges Element der Ausgleichseinrichtung ein Ringkörper aus elastomerem Werkstoff angeordnet, beim gezeigten Beispiel jeweils in Form eines O-Ringes 75. Die Ringnuten 65 und 73 haben die Form kreisrund begrenzter Mulden, denen in der Wand des Bohrungsabschnitts 79 der Antriebswelle 21 Ringnuten 77 und 79 gegenüberliegen, die entsprechend rund gewölbt sind, jedoch eine geringere Tiefe besitzen als die Ringnuten 65, 73 im Schaftteil 27 des Kupplungsteils 15.

Die durch die Ausgleichseinrichtung dergestalt gebildete nachgiebige Lagerung ermöglicht nicht nur einen Ausgleich möglicher Lage- oder Fluchtungsfehler, so dass ein sicheres und störungsfreies Einfahren des antriebsseitigen Kupplungsteils 13 in das abtriebsseitige Kupplungsteil 15 bei der Bewegung einer jeweiligen Werkzeugstation in die Arbeitsposition sichergestellt ist, sondern bewirkt durch die elastomeren Dämpferelemente eine effektive Schwingungsdämpfung, so dass Bearbeitungsvorgänge mit guter Bearbeitungsqualität auch bei sehr hohen Drehzahlen durchführbar sind. Gleichzeitig zeichnet sich die mit Ausgleichselementen in Form von O-Ringen ausgebildete Ausgleichseinrichtung durch eine besonders einfache und kompakte Bauweise aus.

## Patentansprüche

1. Werkzeugrevolver, mit einem an einer Werkzeugmaschine anzubringenden oder angebrachten Grundkörper (1), der eine Revolverachse definiert, um die drehbar am Grundkörper (1) eine Werkzeugscheibe (3) gelagert ist, die mehrere an ihrem Umfang verteilte Werkzeugstationen aufweist, die durch Drehen der Werkzeugscheibe (3) jeweils in mindestens eine Arbeitsposition bringbar sind, in der ein im Inneren der Werkzeugscheibe (3) befindlicher Spindelantrieb (11) mit seinem antriebsseitigen Kupplungsteil (13) mit einem abtriebsseitigen, von einem motorischen Werkzeugantrieb (17, 21) antreibbaren Kupplungsteil (15) des Grundkörpers (1) für den Antrieb eines Werkzeuges in den Kupplungseingriff kommt, das sich an der auf die Arbeitsposition ausgerichteten Werkzeugstation befindet, und mit einer Ausgleichseinrichtung (23) zum Ausgleich von Lage- oder Fluchtungsfehlern zumindest im Bereich dieses Kupplungseingriffs, **dadurch gekennzeichnet, dass** die Ausgleichseinrichtung (23) im Grundkörper (1) zwischen dem Werkzeugantrieb (17, 21) und dem abtriebsseitigen Kupplungsteil (15) angeordnet ist.

2. Werkzeugrevolver nach Anspruch 1, **dadurch gekennzeichnet, dass** der Werkzeugantrieb (17, 21) eine Antriebswelle (21) mit einer koaxialen Bohrung (29) aufweist, die in ihrem der Werkzeugscheibe (3) zugewandten offenen Endbereich für ein in die Bohrung (29) eingreifendes Schaftteil (27) des abtriebsseitigen Kupplungsteils (15) einen die Ausgleichseinrichtung (23) bildenden, begrenzt nachgiebigen Sitz bildet.

3. Werkzeugrevolver nach Anspruch 1 oder 2, **dadurch gekennzeichnet, dass** zur Bildung der Ausgleichseinrichtung (23) zwischen dem Außenumfang des Schaftteils (27) und der Bohrung (29) der Antriebswelle (21) mindestens ein federnachgiebiges Element (75) angeordnet ist.

4. Werkzeugrevolver nach einem der vorstehenden Ansprüche,
**dadurch gekennzeichnet, dass** als nachgiebige Elemente zumindest zwei elastomere Ringkörper, vorzugsweise O-Ringe (75), vorgesehen sind, die in Ringnuten (65, 73) sitzen, die in einem axialen Abstand voneinander im Außenumfang des Schaftteils (27) ausgebildet sind.

5. Werkzeugrevolver nach einem der vorstehenden Ansprüche,
**dadurch gekennzeichnet, dass** zwischen dem die Ringnuten (65, 73) aufweisenden Längenbereich (67) des Schaftteils (27) und dem zugeordneten Abschnitt (69) der Antriebswelle (21) ein minimales Radialspiel (71) vorgesehen ist.

6. Werkzeugrevolver nach einem der vorstehenden Ansprüche,
**dadurch gekennzeichnet, dass** im Sitz eine formschlüssige Antriebsverbindung (61, 63) zwischen Antriebswelle (21) und abtriebsseitigem Kupplungsteil (15) gebildet ist.

7. Werkzeugrevolver nach einem der vorstehenden Ansprüche,
**dadurch gekennzeichnet, dass** die formschlüssige Antriebsverbindung durch eine Evolventenverzahnung (61, 63) gebildet ist, die zwischen der Bohrung (29) der Antriebswelle (21) und einem Abschnitt des Schaftteils (27) ausgebildet ist, der sich in dem zu den elastomeren Ringkörpern (75) axial versetzten, von der Werkzeugscheibe (3) abgewandten Endteil (57) des Schaftteils (27) befindet.

8. Werkzeugrevolver nach einem der vorstehenden Ansprüche,
**dadurch gekennzeichnet, dass** das abtriebsseitige Kupplungsteil (15) eine von dem der Werkzeugscheibe (3) zugewandten Ende ausgehende koaxiale Sackbohrung (31) aufweist, an deren Grund (39) ein Durchgang (41) für eine Schraube (43) gebildet ist, die mit einem in der Bohrung (29) der Antriebswelle (21) festgelegten Haltekörper (49) derart verschraubt ist, dass zwischen dem in der Sackbohrung (31) befindlichen Schraubenkopf (45) und deren Grund (39) ein Axialspiel (55) gebildet ist.

9. Werkzeugrevolver nach einem der vorstehenden Ansprüche,
**dadurch gekennzeichnet, dass** in der Bohrung (29) der Antriebswelle (21) ein eine Anschlagschulter (51) bildender Absatz vorgesehen ist, an dem der Haltekörper (49) gegen eine Bewegung in Richtung auf die Werkzeugscheibe (3) hin gesichert ist.

10. Werkzeugrevolver nach einem der vorstehenden Ansprüche,
**dadurch gekennzeichnet, dass** die koaxiale Sackbohrung (31) am offenen Ende mit einem Querschlitz (33) geöffnet ist, in den ein Mitnehmersteg (37) des antriebsseitigen Kupplungsteils (13) der Spindelantriebe (11) der Werkzeugstationen einfahrbar ist, wenn die jeweiligen Werkzeugstationen sich in die Arbeitsposition bewegen.

## Claims

1. A tool turret, comprising a base body (1) that can be or that is attached to a machine tool and that defines a turret axis about which a tool disc (3) is mounted rotatably on the base body (1), which tool disc has a number of tool stations distributed around its circumference and which, by turning the tool disc (3) can each be brought into at least one working position in which a spindle drive (11) located within the tool disc (3) comes with its drive-side coupling part (13) into coupling engagement with an output-side coupling part (15) of the base body (1) that can be driven by a motorised tool drive (17, 21) to drive a tool which is located at the tool station aligned to the working position, and with a compensation device (23) for compensating for positioning errors or misalignments at least in the region of this coupling engagement, **characterised in that** the compensation device (23) is disposed in the base body (1) between the tool drive (17, 21) and the output-side coupling part (15).

2. The tool turret according to Claim 1, **characterised in that** the tool drive (17, 21) has a drive shaft (21) with a coaxial bore hole (29) which in its open end region facing the tool disc (3) and for a shaft part (27) of the output-side coupling part (15) engaging in the bore hole (29) forms a seat that is flexible to a certain extent and forms the compensation device (23).

3. The tool turret according to Claim 1 or 2, **characterised in that** in order to form the compensation device (23) between the outer circumference of the shaft part (27) and the bore hole (29) of the drive shaft (21) at least one resilient element (75) is provided.

4. The tool turret according to any of the preceding claims, **characterised in that** at least two elastomeric annular bodies, preferably O-rings (75), are provided as flexible elements, which elements sit in annular grooves (65, 73) which are formed in the outer circumference of the shaft part (27), spaced apart from one another by an axial distance.

5. The tool turret according to any of the preceding claims, **characterised in that** minimal radial play (71) is provided between the longitudinal region (67) of the shaft part (27) that has the annular grooves (65, 73) and the assigned section (69) of the drive shaft (21).

6. The tool turret according to any of the preceding claims, **characterised in that** a form-locking drive connection (61, 63) is formed in the seat between the drive shaft (21) and the output-side coupling part (15).

7. The tool turret according to any of the preceding claims, **characterised in that** the form-locking drive connection is formed by involute gearing (61, 63) which is formed between the bore hole (29) of the drive shaft (21) and a section of the shaft part (27) which is located in the end part (57) of the shaft part (27) axially offset from the elastomeric annular bodies (75) and facing away from the tool disc (3).

8. The tool turret according to any of the preceding claims, **characterised in that** the output-side coupling part (15) has a coaxial blind hole (31) passing from the end facing the tool disc (3), on the bottom (39) of which bind hole a passage (41) for a screw (43) is formed, which screw is screwed to a retaining body (49) fixed in the bore hole (29) of the drive shaft (21) such that axial play (55) is formed between the screw head (45) located in the blind hole (31) and its bottom (39).

9. The tool turret according to any of the preceding claims, **characterised in that** there is provided in the bore hole (29) of the drive shaft (21) a ledge that forms a stop shoulder (51) on which the retaining body (49) is secured against movement in the direction of the tool disc (3).

10. The tool turret according to any of the preceding claims, **characterised in that** the coaxial blind hole (31) is opened at the open end with a transverse slot (33) into which an entrainment bar (37) of the drive-side coupling part (13) of the spindle drives (11) of the tool stations can be moved when the respective tool stations move into the working position.

## Revendications

1. Tourelle à outil, comprenant un corps (1) de base à mettre ou mis sur une machine-outil, qui définit un axe de tourelle autour duquel un disque (3) à outil est monté tournant sur le corps (1) de base, disque qui a plusieurs poste d'outil, qui sont répartis sur son pourtour et qui peuvent être mis, chacun par rotation du disque (3) à outil, au moins dans une position de travail, dans laquelle un entraînement (11) à broche, se trouvant à l'intérieur du disque (3) à outil, vient en prise (13) d'accouplement, pour l'entraînement d'un outil, avec une partie (15) d'accouplement du corps (1) de base du côté sortie, pouvant être entraînée par un entraînement (17, 21) à moteur d'outil, lequel outil se trouve au poste d'outil dirigé sur la position de travail, et comprenant un dispositif (23) de compensation pour compenser les défauts de position ou d'alignement au moins dans la partie de cette prise d'accouplement, **caractérisée en ce que** le dispositif (23) de compensation est disposé dans le corps (1) de base entre l'entraînement (17, 21) d'outil et la partie (15) d'accouplement du côté de la sortie.

2. Tourelle à outil suivant la revendication 1, **caractérisée en ce que** l'entraînement (17, 21) d'outil a un arbre (21) d'entraînement ayant un alésage (29) coaxial, qui forme, dans sa partie d'extrémité ouverte tournée vers le disque (3) à outil, pour une partie (27) de fût pénétrant dans l'alésage (29) de la partie (15) d'accouplement du côté de la sortie, un siège cédant élastiquement d'une manière limitée et formant le dispositif (23) de compensation.

3. Tourelle à outil suivant la revendication 1 ou 2, **caractérisée en ce que**, pour former le dispositif (23) de compensation, au moins un élément (75) cédant à la manière d'un ressort est monté entre le pourtour extérieur de la partie (27) de fût et l'alésage (29) de l'arbre (21) d'entraînement.

4. Tourelle à outil suivant l'une des revendications précédentes, **caractérisée en ce qu'**il est prévu comme élément cédant élastiquement au moins deux pièces annulaires en élastomère, de préférence des joints (75) toriques, qui viennent dans des rainures (65, 73) annulaires, formées à une distance axiale l'une de l'autre sur le pourtour extérieur de la partie (27) de fût.

5. Tourelle à outil suivant l'une des revendications précédentes, **caractérisée en ce qu'**il est prévu un jeu (71) radial minimum entre la partie (67) longitudinale, ayant des rainures (65, 73) annulaires, de la partie (27) de fût et le tronçon (69) associé de l'arbre (21) d'entraînement.

6. Tourelle à outil suivant l'une des revendications précédentes, **caractérisée en ce qu'**il est formé dans le siège une liaison (61, 63) d'entraînement à complémentarité de forme entre l'arbre (21) d'entraînement et la partie (15) d'accouplement du côté de la sortie.

7. Tourelle à outil suivant l'une des revendications précédentes, **caractérisée en ce que** la liaison d'entraînement à complémentarité de forme est formée par une denture (61, 63) à développante constituée entre l'alésage (29) de l'arbre (21) d'entraînement et un tronçon de la partie (27) de fût, qui se trouve dans la partie (57) d'extrémité, décalée axialement par rapport au corps (75) annulaire en élastomère et éloignée du disque (3) à outil, de la partie (27) de fût.

8. Tourelle à outil suivant l'une des revendications précédentes, **caractérisée en ce que** la partie (15) d'accouplement du côté de la sortie a un trou (31) borgne coaxial sortant de l'extrémité tournée vers le disque (3) à outil, trou borgne au fond (39) duquel est formé un passage (41) pour une vis (43), qui est vissée à une pièce (49) de maintien fixée dans l'alésage (29) de l'arbre (21) d'entraînement, de manière à former un jeu (55) axial entre la tête (45) de la vis se trouvant dans le trou (31) borgne et le fond (39).

9. Tourelle à outil suivant l'une des revendications précédentes, **caractérisée en ce que**, dans l'alésage (29) de l'arbre (21) d'entraînement est prévu un talon, qui forme un épaulement (51) de butée et sur lequel la pièce (49) de maintien est empêchée de se déplacer en direction du disque (3) à outil.

10. Tourelle à outil suivant l'une des revendications précédentes, **caractérisée en ce que** le trou (31) borgne coaxial est ouvert à l'extrémité ouverte par une fente (33) transversale, dans laquelle un toc (37) d'entraînement de la partie (13) d'accouplement, du côté de la sortie, de l'entraînement (11) à broche des postes de travail, peut entrer, lorsque les postes de travail viennent dans la position de travail.
